# EUROPEAN PATENT APPLICATION

(11) **EP 4 174 819 A1**
(43) Date of publication of application: **03.05.2023**
(21) Application number: 21306525.3
(22) Date of filing: 29.10.2021
(51) Int. Cl.: G08G 1/16, G08G 1/01

(54) **DRIVING SAFETY SYSTEM**

(71) Applicant: Toyota Jidosha Kabushiki Kaisha, Toyota-shi, Aichi-ken, 471-8571 (JP)
(72) Inventor: FENT, Guillaume, 1140 Brussels (BE); JONES, Daniel, 1140 Brussels (BE)
(74) Representative: Cabinet Beau de Loménie

(57) **Abstract**

Computer-implemented method of assessing a risk of a first road user (50) colliding, within an area (5), with a second road user (60), the method comprising:
-determining a predicted path of the first road user (50), which is a road user path along which the first road user (50) is predicted to travel,
-determining a predicted path of the second road user (60), which is a road user path along which the second road user (60) is predicted to travel, and
-calculating the collision risk assessment by determining a likelihood of collision between the first road user (50) and the second road user (60) based on the first road user's predicted path, the second road user's predicted path, and a combination of current data and past data,
wherein:
-the current data correspond to a current period, during which the first road user (50) is present in the area (5), and include a current behavior of the first road user (50) and a current behavior of the second road user (60),
-the past data correspond to a past period, prior to the first period, and include a path history (6) of the area (5),
-the path history (6) includes a plurality of past paths (P5, P6, P7, P8), which are road user paths performed in the area (5) during the past period,
-determining the first road user's predicted path includes comparing the first road user's current behavior to the path history (6), and matching at least one first past path (P5, P8) of the path history (6) to the first road user's current behavior, and basing the first road user's predicted path on said at least one first past path (P5, P8).

## Description

### FIELD

The present disclosure relates to the field of road user safety, and collision risk assessment.

### BACKGROUND ART

United States Patent Application Publication No. US20130253815A1 discloses a system of determining information about a path or a road vehicle, as well as a way to avoid collision of a first vehicle with a second vehicle within a roadway intersection. Current data, pertaining to the first and second vehicles as they negotiate the roadway intersection, are obtained substantially in real time and used in combination with a geometrical model of the roadway intersection, to predict paths for the first and second vehicles. The predicted paths are then used to determine a likelihood of collision between the first and second vehicles.

International Application WO2014174001A1 discloses a method for determining a lane course of a lane, which is a curve describing how vehicles have typically travelled through the lane in the past.

### SUMMARY

The inventors have recognized that known techniques for assessments of risks of collisions between multiple road users are not sufficiently reliable, and are overly susceptible to incorrectly identifying a risk of collision (false positive), or incorrectly disregarding a risk of collision (false negative).

To address these problems, a method of assessing a risk is provided. The method is a computer-implemented method of assessing a risk of a first road user colliding, within an area, with a second road user. The method includes determining a predicted path of the first road user, the predicted path of the first road user being a road user path along which the first road user is predicted to travel, determining a predicted path of the second road user, the predicted path of the second road user being a road user path along which the second road user is predicted to travel, and calculating the collision risk assessment by determining a likelihood of collision, within the area, between the first road user and the second road user based on the predicted path of the first road user, the predicted path of the second road user, and a combination of current data and past data. The current data correspond to a current period, during which the first road user is present in the area, and include a current behavior of the first road user and a current behavior of the second road user. The past data correspond to a past period, prior to the first period, and include a path history of the area. The path history of the area includes a plurality of past paths, which are road user paths performed in the area during the past period. Determining the predicted path of the first road user includes comparing the current behavior of the first road user to the path history of the area, and matching at least one first past path of the path history of the area to the current behavior of the first road user, and basing the predicted path of the first road user on said at least one first past path.

As such, it may be possible to assume that similarities between the first road user's current behavior and the behavior of a road user which created a particular past path will lead to the first road user negotiating the area in a similar manner to the road user which created the past path.

Determining the predicted path of the second road user may include comparing the current behavior of the second road user to the path history of the area, and matching at least one second past path of the path history of the area to the current behavior of the second road user, and basing the predicted path of the second road user on said at least one second past path.

As such, it may be possible to improve determination of the predicted path of the second road user.

Determining the predicted path of the first road user may include matching a plurality of first past paths of the path history of the area to the current behavior of the first road user, and basing the predicted path of the first road user on said plurality of first past paths. Additionally or alternatively, determining the predicted path of the second road user may include matching a plurality of second past paths of the path history of the area to the current behavior of the second road user, and basing the predicted path of the second road user on said plurality of second past paths. In some embodiments, the determined likelihood is based (indirectly) on a combination of current and past data since the predicted path(s) of the first and/or the second road user is/are predicted based on a combination of current and past data.

As such, it may be possible to assume that the first and/or second road user will negotiate the area in a manner consistent with the plurality of past paths.

The current behavior of the first road user may include data pertaining to the first road user's position, velocity, acceleration, steering, yaw angle, yaw rate, or combinations thereof, and/or the current behavior of the second road user may include data pertaining to the second road user's position, velocity, acceleration, steering, yaw angle, yaw rate, or combinations thereof.

The method may also include recording one or more new road user paths based on the current behavior of the first road user and/or the current behavior of the second road user, and, subsequent to the current period, enriching the past data by supplementing the path history of the area with said one or more new road user paths.

As such, it may be possible to keep the path history populated with up-to-date information about how road users negotiate the area.

The method may also include combining the path history of the area with past data pertaining to a road user's past behavior in the area during the past period.

As such, it may be possible to use this past behavior to construct the path history dynamically, or to supplement a pre-constructed path history.

A driving safety system may also be provided. The driving safety system includes at least one processor, and memory storing instructions which, when executed by said at least one processor cause said at least one processor to perform the method as described earlier herein, in order to provide a first road user with a collision risk assessment of an area with respect to a second road user.

As such, the first road user may be able to detect and/or avoid possible collisions more effectively.

The driving safety system may be configured to acquire data about at least one of the first road user and the second road user pertaining to the current behavior of said at least one of the first road user and the second road user based on sensor(s) of the driving safety system. The driving safety system may be configured to determine a level of confidence for the acquired data, based at least on said sensor(s), and optionally on a detection distance between one of the sensor(s) and said at least one of the first road user and the second road user, and modulate the collision risk assessment based on the level of confidence.

As such, the driving safety system may be able to differentiate between data according to how said data were obtained, and to compensate for possible variations in the relative reliability of received data versus measured data.

The driving safety system may be configured to obtain a current behavior of a first road user, obtain a path history of an area in a vicinity of the first road user, detect a second road user in the vicinity of the first road user, obtain a current behavior of the second road user in response to detection of the second road user, perform a first collision risk assessment in response to detection of the second road user, and issue a warning to the first road user and/or the second road user in response to the first collision risk assessment exceeding a predetermined risk threshold.

As such, the first and/or second road user may be warned in response to an elevated risk of collision.

The driving safety system may be configured to detect the second road user in the vicinity of the first road user by means of a communications system. The driving safety system may be configured to obtain the second road user's current behavior, by means of the communication system, in response to detection of the second road user by means of the communications system. The driving safety system may be configured to perform the first collision risk assessment in response to detection of the second road user in the vicinity of the first road user by means of the communications system.

As such, the first collision risk assessment may be performed using the second road user's current behavior, as detected by means of at least the communications system.

The driving safety system may be configured to detect the second road user by means of at least one environment sensor of the first road user. The driving safety system may be configured to obtain the second road user's current behavior, by means of the environment sensor(s), in response to detection of the second road user by means of the environment sensor(s). The driving safety system may be configured to perform a second collision risk assessment by means of the method as described earlier herein in response to detection of the second road user by means of the environment sensor(s).

As such, the second collision risk assessment may be performed using the second road user's current behavior, as detected by means of at least the environment sensor(s).

The driving safety system may be configured to perform a driving safety operation based at least on the first road user's current behavior, the path history, and optionally the second road user's current behavior, in response to at least one of the first collision risk assessment and the second collision risk assessment.

As such, the result of the collision risk assessment(s) may dictate whether or even how to perform the driving safety operation.

The driving safety system may be configured to assign a level of confidence to the past data, and to perform the driving safety operation if the level of confidence exceeds a predetermined confidence threshold. The level of confidence may correspond to a quantity of past data available for use in performing said at least one of the first collision risk assessment and the second collision risk assessment.

As such, whether or how to perform the driving safety operation may depend at least in part on how rich were the past data used in the collision risk assessments).

The driving safety operation may include deactivation of the warning and/or adjustment and/or execution of one or more of the following functionalities of the first road user and/or second road user: an adaptive cruise control (ACC) functionality, a pre-crash safety (PCS) functionality, an automatic high-beam (AHB) functionality, a lane-change assistance (LCA) functionality, a lane-keeping assistance (also called "lane trace assistance" LTA) functionality.

The driving safety system may be configured to determine whether the second road user's current behavior, as obtained by means of one of the communications system and the environment sensor(s), is associated with a malfunction state of said one of the communications system and the environment sensor(s). The driving safety system may be configured to perform the second collision risk assessment based on the first road user's current behavior, the path history, and the second road user's current behavior, as obtained by means of the other of the communications system and the environment sensor(s), in response to determining that the second road user's current behavior, as obtained by means of said one of the communications system and the environment sensor(s), is associated with a malfunction state of said one of the communications system and the environment sensor(s).

As such, it is possible to avoid relying on malfunctioning equipment when performing the second collision risk assessment.

The driving safety system may be configured to perform the second collision risk assessment based on the first road user's current behavior, the path history, the second road user's current behavior, as obtained by the communications system, and the second road user's current behavior, as obtained by the environment sensor(s), in response to determining that neither the second road user's current behavior, as obtained by means of the communications system, nor the second road user's current behavior, as obtained by means of the environment sensor(s), is associated with malfunction states of the communications system and environment sensor(s).

As such, it is possible to perform the collision risk assessment based on a more accurate representation of the second road user's current behavior.

Roadway infrastructure equipment may be provided, including a driving safety system as described earlier herein. The roadway infrastructure equipment is configured obtain the current behavior of the first road user and the current behavior of the second road user and to transmit the collision risk assessment to the first road user.

As such, the driving safety system may be provided for the area.

A vehicle may be provided, which is configured to transmit its current behavior to a driving safety system according as described earlier herein, and to receive therefrom a risk assessment of an area in which the vehicle is or will be present.

As such, the vehicle may be able to communicate with the driving safety system in order to facilitate performance of the collision risk assessment that it receives therefrom.

A vehicle may be provided, which includes the driving safety system as described earlier herein.

As such, the vehicle may be provided with means for detecting and/or avoiding collisions with other road users.

A vehicle as described earlier herein may also include means of communicating its current behavior to another road user.

As such, the vehicle may be able to facilitate said another road user's performance of a collision risk assessment.

One or more computer program(s) may be provided, including instructions which, when the program(s) is/are executed by at least one computer, cause the at least one computer to carry out the method as described earlier herein.

As such, the program(s) configure(s) the computer(s) to perform a collision risk assessment.

The computer program(s) may use any programming language, and be in the form of source code, object code, or code intermediate between source code and object code, such as in a partially compiled form, or in any other desirable form. The at least one computer may be any data processing means, for instance one or more personal computer(s), one or more processors, one or more remote servers, etc. It can be made up of a single machine or a plurality of machines, for instance spread over different locations.

A computer-readable medium may be provided, including instructions of a computer program as described earlier herein.

As such, the computer program may be provided to the computer.

The computer-readable medium may be non-transitory. The computer program(s) may be stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

### BRIEF DESCRIPTION OF THE DRAWINGS

The disclosure may be more completely understood in consideration of the following detailed description of aspects of the disclosure in connection with the accompanying drawings, in which:
Fig. 1 shows a first exemplary area during a first period, during which an exemplary road user provided with an exemplary driving safety system is present.
Fig. 2 shows the area of Fig. 1 during at the end of a second period, prior to the first period.
Fig. 3 shows a second exemplary area, with an exemplary driving safety system provided with roadway infrastructure equipment.
Fig. 4 shows a third exemplary area during the first period, and a dynamically-constructed path area therefor.
Fig. 5 shows a flowchart representing an exemplary operation process of an exemplary driving safety system.
Fig. 6 shows an exemplary road user.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

### DETAILED DESCRIPTION

As used in this disclosure and the appended claims, the singular forms "a", "an", and "the" include plural referents unless the content clearly dictates otherwise. As used in this disclosure and the appended claims, the term "or" is generally employed in its sense including "and/or" unless the content clearly dictates otherwise.

The following detailed description should be read with reference to the drawings. The detailed description and the drawings, which are not necessarily to scale, depict illustrative aspects and are not intended to limit the scope of the disclosure. The illustrative aspects depicted are intended only as exemplary.

Although the terms "first," "second," etc. may be used herein to describe various actions, road users, and/or periods, these actions, road users, and/or periods should not be limited by these terms. These terms are only used to distinguish one action, road user, or period from another action, road user, or period. Thus, a first action, road user, or period discussed herein could be termed a second action, road user, or period without departing from the teachings of the present inventive subject matter.

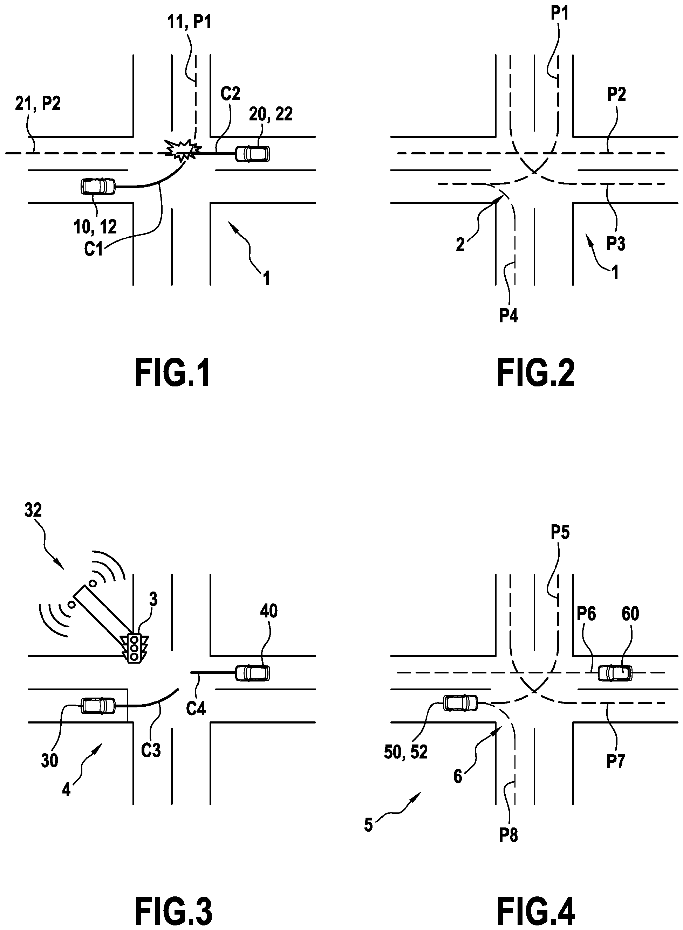

Fig. 1 shows a roadway intersection 1. A roadway intersection is a non-limiting example of an area which may be negotiated by one or more road users, and with respect to which a collision risk assessment may be provided.

In Fig. 1, the roadway intersection 1 is shown during a first period, in which a first road user 10 is present at the roadway intersection 1. The first road user 10 is represented here as a vehicle, which is a non-limiting example of a road user.

A second vehicle 20 is also present at the roadway intersection 1. A collision risk assessment is performed for the roadway intersection 1. The collision risk assessment assesses a risk of collision between the first road user 10 and the second road user 20 as they negotiate the roadway intersection 1. Negotiation of an area by a road user involves travel into the area, out of the area, through the area, within the area, or combinations thereof.

For the sake of simplicity, the roadway intersection is shown as being negotiable by road users according to a right-hand-drive traffic convention.

The collision risk assessment is calculated by determining a likelihood of collision between the first road user 10 and the second road user 20, based on a predicted path 11 of the first road user 10 and a predicted path 21 of the second road user 20. Each predicted path 11, 21, is a road user path along which the corresponding road user 10, 20 is predicted to travel from its current positon while negotiating the roadway intersection 1. The determined likelihood of collision reflects an initial consideration of the predicted paths 11, 21. The collision risk assessment may or may not differ from the determined likelihood of collision, depending on whether or how much this initial consideration is refined through consideration of additional factors (of which non-limiting examples may include confidence, road conditions, past data density, etc.).

A road user path is a record of a road user's behavior. A road user's behavior is a set of data about the road user, which includes at least the road user's position. In addition to the road user's position, the road user's behavior may include the road user's velocity, speed, acceleration, deceleration, heading, steering, braking, or combinations thereof.

In the example illustrated in Fig. 1, each predicted path 11, 21 is determined based on a combination of current data and past data, with current data corresponding to the first period, and past data corresponding to a second period, prior to the first period. In other words, in the example illustrated in Fig. 1, the first period is a "current period", and the second period is a "past period". Thus, the likelihood of collision is determined based (possibly indirectly) on a combination of current data and past data.

The current data include a current behavior of the first road user 10 and a current behavior of the second road user 20. "Current behavior" includes data about the road user that are reflective of the current period, such as the road user's current position, etc. The current behavior C1 of the first road user 10 is represented as a solid line extending in a forward direction of the first road user 10, in this case representing initiation of a left turn. The current behavior C2 of the second road user 20 is represented as a solid line extending in a forward direction of the second road user 20, in this case representing driving straight ahead.

The past data include a path history of the area (in this case the roadway intersection 1).

Fig. 2 shows the roadway intersection 1 of Fig. 1, at the end of the second period, with an exemplary path history 2 for the roadway intersection 1 overlaid thereon. The path history 2 includes a plurality of past paths P1, P2, P3, P4, represented as dashed lines. Each past path P1, P2, P3, P4 is a road user path performed in the roadway intersection 1 prior to the first period - for example during the second period or prior to the second period.

As a road user negotiates the roadway intersection 1 (area) during the second period (which is said road user's current period in this case), said road user's behavior while negotiating the roadway intersection 1 (said road user's current behavior) may be recorded to form a new road user path. After the second period, the new road user path may be stored in the path history 2.

Returning now to Fig. 1, it is illustrated that determination of each predicted path 11, 21 involves comparing the respective road user's current behavior C1, C2 to the roadway intersection's path history, matching at least one past path P1, P2 of said path history to said current behavior C1, C2, and basing said predicted path 11, 21 on said at least one past path P1, P2. It is contemplated that, when a plurality of past paths is matched to the road user's current behavior C1, C2, the predicted path may be based on said plurality of past paths.

Comparing the current behavior C1, C2 to the path history involves identifying one or more candidate paths in the path history. A path of the path history is considered to be a candidate path if it is possible, given said road user's current behavior, for said road user to negotiate the area according to said path. For example, if the road user's current position does not correspond to a given path, it is not possible for the road user to negotiate the area according to said path, and so said path is not a candidate path. As a non-limiting example, correspondence between the road user's current behavior and a given path can be determined on the basis of a difference between the current behavior (or one or more elements thereof, such as position data for example) and the path not exceeding a maximum threshold. Comparison of Fig. 1 and Fig. 2 reveals that past paths P1 and P4 of the path history 2 may be considered candidate paths for the first road user 10, given the first road user's current behavior C1, and that past path P2 of the path history 2 may be considered a candidate path for the second road user 20, given the second road user's current behavior C2.

Matching the current behavior C1, C2 to the path history 2 involves identifying at least one candidate path as a probable path. Identification of a candidate path as probable may be performed on the basis of a degree of correspondence between the current behavior C1, C2 of the road user 10, 20 and the behavior(s) reflected in the candidate path(s). For example, correspondence of a given candidate path to a given road user's current behavior can be evaluated in terms of deviation and/or distance from the given candidate path, as calculated based on the given road user's current behavior. It is contemplated to disregard a given candidate path if its degree of correspondence does not meet or surpass one or more predetermined correspondence thresholds. Comparison of Fig. 1 and Fig. 2 reveals that, of the two candidate paths identified above for the first road user (past path P1 and past path P4), the current behavior C1 of the first road user 10 has a high degree of correspondence to past path P1, and a low degree of correspondence to past path P4. Accordingly, past path P1 is a probable path for the first road user 10, but past path P4 is not, given the first road user's current behavior C1. Meanwhile, and similarly, past path P2 is a probable path for the second road user 20, due to its high degree of correspondence to the second road user's current behavior C2.

Basing the predicted path 11, 21 on the path(s) of the path history 2 involves creating the predicted path 11, 21 using the behavior data stored as the probable candidate path(s), and optionally applying one or more modifications thereto using the current behavior C1, C2 of the road user 10, 20. It is contemplated to disregard a given probable path a level of confidence associated with the past path fails to meet or exceed one or more predetermined confidence thresholds. Levels of confidence in past data are discussed in greater detail later herein. In the case of just one probable path, the predicted path may be based thereon. In the case of multiple probable paths, the multiple probable paths may be compared against one another in terms of confidence levels, and the predicted path may be based on the probable path with the highest confidence level. As a non-limiting example, the modification(s) may include extending the probable candidate path(s) based on the current behavior of the road user.

Combining the current behavior C1, C2 of the road user 10, 20 with the path history 2 of the area (roadway intersection 1) allows for the predicted path 11, 21 to be determined based on an assumption that the road user 10, 20 will negotiate the area in a similar manner to whoever performed the path(s) P1, P2 in the path history that correspond to said road user's current behavior C1, C2. As such, it may be possible to extend the prediction interval for a predicted path, and increase accuracy of collision risk assessments based thereon, as compared to predicted paths based only on current behavior.

It is contemplated that the current behavior(s) C1, C2 of the first 10 and/or second 20 road users be recorded as a corresponding number of new road user paths, and to supplement the path history 2, subsequent to the current period, with the(se) new road user path(s), so as to enrich the path history 2 for subsequent collision risk assessments.

A driving safety system 12 is provided to perform the collision risk assessment. The driving safety system includes a computer with memory and one or more processors, configured respectively to store and execute instructions for performing a collision risk assessment.

In the example illustrated in Fig. 1, the collision risk assessment is provided to the first road user 10. As such, said first road user 10 is a so-called "beneficiary" of the driving safety system 12. Within the context of a collision risk assessment provided to the first road user 10, the second road user 20, with which a risk of collision between it and the first road user 10 is assessed, is a so-called "target".

The architecture of the driving safety system 12 may take multiple forms. In Fig. 1, the beneficiary 10 includes the driving safety system 12 (in this case the driving safety system 12 is provided as part of the first road user 10). Accordingly, the first road user 10 can be considered an "ego" road user (or ego vehicle). Other forms for the architecture of the driving safety system will be discussed in greater detail with respect to Fig. 3.

The driving safety system 12 may obtain the current behavior C1, C2 of a given road user number of ways. In the example illustrated in Fig. 1, the driving safety system 12 is able to obtain the beneficiary's current behavior C1 as detected by the beneficiary 10 itself. The beneficiary 10 may be able to detect its own current behavior C1 in a conventional manner. Other ways of obtaining the current behavior of the beneficiary 10 are discussed in greater detail with respect to Fig. 3.

In the example illustrated in Fig. 1, the driving safety system 12 is able to obtain the target's current behavior C2 by measuring it remotely from the beneficiary's current position. For example, the beneficiary 10 may be able to measure the target's current behavior C2 using one or more environment sensors provided to detect the beneficiary's surroundings. As a non-limiting example, the(se) sensor(s) may be vehicle-borne sensors (e.g. RADAR, LiDAR), for example provided as part of an advanced driver assistance system (ADAS) of the beneficiary 10. When the target 20 is in the beneficiary's surroundings, the(se) sensor(s) may detect the target 20 and measure target's current behavior C2.

The driving safety system 12 may assign a level of confidence to the target's current behavior C2, and may modulate the collision risk assessment based on the level(s) of confidence associated with the target's current behavior C2. The level of confidence may reflect the manner in which the driving safety system 12 obtained the target's current behavior C2.

As a non-limiting example, the level of confidence may depend on information related to the sensor(s) used to perform a given measurement, such its type (LiDAR, RADAR, camera, etc....) and/or functional state, and/or its remote measurement range as compared to the distance between the sensor and the target 20. The confidence level may additionally or alternatively depend on whether environmental conditions that typically influence measurement range are detected.

It is also contemplated for the driving safety system 12 to receive the target's current behavior C2, as detected by the target 20 itself. As a non-limiting example, the driving safety system 12 may be configured to receive a data communication (also called a "broadcast" herein) containing the target's current behavior C2. The target 20 may be configured to detect its own behavior in a conventional manner. In order to receive such a broadcast, the driving safety system 12 may comprise a telematics unit.

It is also contemplated for the beneficiary 10 to communicate its current behavior C1 for use by another road user (for example the target 20) by means of a data communication in the same way as described for the data communication of the target 20.

In the example illustrated in Fig. 1, the beneficiary 10 - and therefore the beneficiary's driving safety system 12 - is configured to receive the data communication from the target 20. However, as will be discussed in greater detail with regard to Fig. 3, the data communication may additionally or alternatively be received from elsewhere.

The driving safety system 12 may assign a level of confidence to the target's current behavior C2 based on whether the target's current behavior C2 was detected by the target 20 itself or measured remotely. As a non-limiting example, the target's behavior, as detected by the target 20 itself, may be considered more reliable than measurements of the target's behavior performed remotely, and so may be assigned a higher confidence level. It is contemplated for the driving safety system 12 to make use of target behavior as detected by the target 20 itself, and as measured remotely, in combination.

Although the first road user 10 has been described as being a beneficiary for its own driving safety system 12, it is understood that the first road user 10 may be a target for a driving safety system 22 external to the first road user 10. In the example illustrated here, such a driving safety system 22 is provided in the second road user 20, which is the beneficiary for said driving safety system 22. Accordingly, the second road user 20 may be both a beneficiary (for its own driving safety system 22) and a target (for the driving safety system 12 of the first road user 10).

In Fig. 3, a driving safety system 32 is provided which is at least partially external to the beneficiary. In the present example, the driving safety system 32 is provided as part of roadway infrastructure equipment.

"Roadway infrastructure equipment" refers to an object in the beneficiary's surroundings, other than a target (if present). Non-limiting examples of roadway infrastructure equipment include a guardrail, signage, over/underpasses, traffic measurement systems, and the like.

In the example illustrated in Fig. 3, the driving safety system 32 is provided in a traffic light 3, which is a non-limiting example of roadway infrastructure equipment. The traffic light 3 is situated at a roadway intersection 4 which, for simplicity of explanation, is otherwise identical to the roadway intersection 1 of Fig. 1 and Fig. 2. However, it will be understood that a traffic light 3 including a driving safety system 32 may be provided at any roadway intersection, and more generally, that roadway infrastructure equipment including a driving safety system 32 may be provided at any area for which a collision risk assessment may performed.

In the example illustrated in Fig. 3, a third road user 30 and a fourth road user 40 (each represented here as vehicles) are present at the roadway intersection 4. For simplicity, the third road user 30 will be considered as a beneficiary, and the fourth road user 40 will be considered as a target. However, it is contemplated for the driving safety system 32 to provide collision risk assessments to each of a plurality of road users 30, 40 within a given area, such that a given road user 30, 40 may be a beneficiary for the purpose of one collision risk assessment, and a target for the purpose of another collision risk assessment. Accordingly, the driving safety system 32 is configured to communicate the collision risk assessment to at least one beneficiary. It is also understood that a beneficiary may be configured to receive a collision risk assessment from an external driving safety system.

Moreover, it is contemplated that a road user provided with its own driving safety system may be configured to receive a collision risk assessment from a driving safety system provided in said road user's surroundings.

The driving safety system 32 is configured to obtain the current behavior C3 of the beneficiary 30, and to determine a predicted path for the beneficiary 30 based on the path history of the area (in this case the roadway intersection 4) and the current behavior C3 of the beneficiary 30, and also to obtain the current behavior C4 of the target 40, and to determine a predicted path for the target 40 based on the path history and the current behavior C4 of the target 40.

Obtaining a given road user's behavior may be achieved by receiving it as at least part of a data communication (broadcast), and/or by measuring it remotely. The driving safety system 32 may be configured to receive a data communication from a given road user 30, 40 containing said road user's current behavior C3, C4. The driving safety system 32 may include one or more sensors for detecting a given road user's current behavior remotely. Said sensor(s) may be placed externally to said road user 30, 40, in said road user's surroundings. It is even contemplated that one road user 30 measure another road user's behavior C4 remotely, and perform a data communication, receivable by the driving safety system 32, containing both road users' behaviors C3, C4. Accordingly, it is contemplated that a beneficiary 30 transmit its current behavior C3 to a driving safety system 32 - whether it is provided with roadway infrastructure equipment or provided with another road user - and to receive therefrom a collision risk assessment for the beneficiary's surroundings.

Determining the predicted path of a given road user 30, 40 occurs substantially in the same manner as described for Fig. 1.

Determination of a likelihood of collision between the beneficiary 30 and target 40 based on their respective predicted paths occurs in substantially the same manner as described for Fig. 1.

The path history may be stored as a database included in the driving safety system, or queried remotely by the driving safety system. It is also contemplated for a given driving safety system to maintain a copy of the path history in a local database, and to query a copy of the path history maintained remotely in order to update the copy maintained locally. Additionally or alternatively, as illustrated in Fig. 4, it is contemplated for a road user 10, 20 to construct a path history dynamically, by querying its surroundings.

Fig. 4 shows a roadway intersection 5 for which no path history is maintained, during a first period, in which a fifth road user 50 (in this case an ego road user, represented as a vehicle) is present. To determine the risk of collision with a sixth road user 60 (in this case a target road user for the ego road user 50, and represented as a vehicle), the ego road user's driving safety system 52 queries one or more so-called recent road users (by broadcasting a request) which negotiated the area (roadway intersection 5) within a predetermined time prior to the first period, potentially long enough ago relative to the first period that it was not possible for the ego road user to detect the behavior of the recent road user(s) during its/their negotiation of the roadway intersection 5.

It is contemplated that a given road user be configured to form a record of its current behavior, and maintain this record at least temporarily, so that the record may be consulted, for at least a predetermined period of time, subsequent to the current period.

Accordingly, as the(se) recent road user(s) negotiated the roadway intersection 5 prior to the first period, its/their behavior - which was current behavior at the time - was recorded. Now, in the fifth road user's current period, when the(se) recent road user(s) is/are queried, its/their behavior is returned (as a data communication/broadcast) in response to the query, as so-called "past behavior". The term "past behavior" is used to designate that behavior which occurred prior to the current period.

The driving safety system 52 is thus able to attempt to construct a path history 6 for the area using the past behavior of the recent road user(s) as past paths P5, P6, P7, P8. Such a path history 6 is referred to here as being constructed dynamically. Performing a collision risk assessment using a dynamically-constructed path history may be identical to performing a collision risk assessment using a pre-constructed path history, as described with Fig. 1 and Fig. 3.

If a pre-constructed path history exists for a given area, as is the case for Fig. 1 and Fig. 3, it is contemplated for the driving safety system 52 to combine the pre-constructed path history with a dynamically-constructed path history. Performing a collision risk assessment using such a so-called combined path history may be identical to performing a collision risk assessment using a pre-constructed or dynamically-constructed path history.

Although a dynamically-constructed path history has been presented herein within the context of a driving safety system provided onboard of a road user, it is also contemplated for a driving safety system provided in a road user's surroundings, such as in roadway infrastructure equipment, to dynamically-construct a path history in the same manner.

During the current period, the beneficiary 50 and target 60 may record their current behavior, which may be queried subsequent to the current period, as described above.

Querying and receiving the past behavior of a given road user may occur using the data communication technique described above with respect to the current behavior.

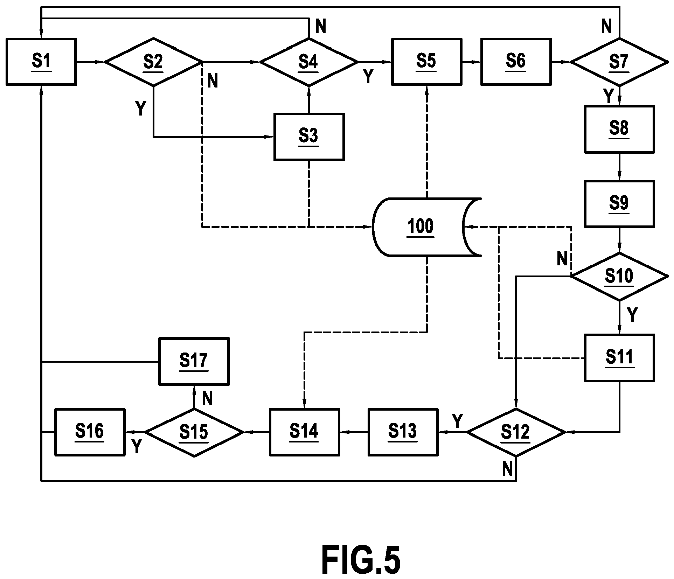

Fig. 5 shows a flowchart representing an exemplary operation process of an exemplary driving safety system. It is contemplated to perform the illustrated process in a repetitive fashion.

In step S1, the driving safety system acquires current data, which include current behavior of at least one road user (for example the beneficiary) and the surroundings of said at least one road user. The current data can be acquired by means of equipment such as a communications system (for example V2X) and/or an environmental detection system (for example as provided with ADAS, or any suitable system known in the art capable of detecting a road user's surroundings and generating output - in the form of information and/or in the form of a change in the road user's behavior - in response to detecting the road user's surroundings).

For example, the driving safety system acquires at least the beneficiary's current position. Current position may be acquired for example using a global satellite navigation system.

When multiple road users are present, the driving safety system may also obtain the current behavior of one or more target road users. As a non-limiting example, the driving safety system may acquire a broadcast from the target which contains at least the target's current behavior. A broadcast is another term for a data communication as used herein. As a non-limiting example, the broadcast may be performed as V2I (vehicle-to-infrastructure), V2V (vehicle-to-vehicle), V2X (vehicle-to-everything), or combinations thereof, and may include, for example one or cooperative awareness messages (CAM), decentralized environmental notification messages (DENM), or the like, or combinations thereof.

In addition to the target's current position, the target's behavior, as contained in the broadcast, may contain information relating to the target's speed, acceleration, velocity, heading, yaw angle and yaw rate and in the case of a vehicle, its steering position and braking.

It is contemplated to use data gathered by environmental detection system to corroborate data gathered by the communications system.

In step S2, the driving safety system examines whether the equipment used to collect the current data during step S1 is functioning properly. If no malfunction is detected in step S2, the driving safety system proceeds to step S4; otherwise, the driving safety system proceeds to step S3 before proceeding to step S4.

In step S3, driving safety system isolates current data which were obtained from non-malfunctioning equipment from those which were obtained from malfunctioning equipment. The current data obtained from non-malfunctioning equipment is then used in step S4.

In step S4, the current data (be they from all systems, or only from non-malfunctioning systems), are examined to determine whether another road user is detected (for example the target). If no target is detected in step S4, then the driving safety system reverts back to step S1; otherwise, the driving safety system proceeds to step S5.

Detection of a target by means of the communications system may simply correspond to receipt of the target's broadcast, for example. However, even if no message received by the communications system signals the presence of a target, the driving safety system may attempt to detect any target present by other means, such as by the environmental detection system.

On the other hand, if the driving safety system detects that a target is in the vicinity of the beneficiary, the driving safety system performs a first collision risk assessment. Detection, by means of the communications system, that the target is in the vicinity of the beneficiary, corresponds to comparison of the target's current position, as contained in the broadcast, to the beneficiary's current position, equaling or being inferior to a predetermined distance. Advantageously, this detection may be performed even when the beneficiary and the target are at some distance from each other, for instance before they are in line-of-sight from each other (in particular in an urban environment). Detection by means of the environmental detection system may simply correspond to presence of the target within the detection range of the relevant sensor of the environmental detection system.

In step S5, the driving safety system performs a first collision risk assessment, as described earlier herein. The driving safety system accesses past data, represented here as a database 100, including a path history for the area, which it has obtained either through dynamic construction, or through obtaining a pre-constructed path history, or through a combination of the two, as described earlier herein. In Fig. 5, dashed lines represent a flow of information from the past data into the collision risk assessment, as input.

It is contemplated for the driving safety system to perform pre-processing of the path history, in order to determine the relative probabilities, or a distribution of probabilities, for the past paths of the path history. These relative probabilities or this distribution of probabilities may be represented as a heatmap of the different past paths on a map. As a non-limiting example, the probabilities or distribution of probabilities may be inputted to a Kalman filter in order determine the predicted path(s) of the first and/or second road user(s). In addition, these relative probabilities or this distribution of probabilities may be used to modulate the collision risk assessment by increasing or reducing the calculated likelihood of collision associated with their respective predicted paths.

The path history, as obtained or as processed, and the beneficiary's current behavior, are used to determine a predicted path for the beneficiary, as described earlier herein. The path history, as obtained or as processed, and the target's current behavior can be used to determine a predicted path for the target, in the same manner as described for the beneficiary's predicted path. However, it is also contemplated for the target's broadcast to contain the target's predicted path.

Then, the first risk assessment of the beneficiary colliding within the area with the target(s) is carried out: the likelihood of collision between the beneficiary and a given target is determined, based on the predicted paths of the beneficiary and target, and a combination of current data and past data.

The driving safety system may additionally modulate the collision risk assessment based on a type of area in which the beneficiary is located. The type of area may, for example take into account road surface conditions and topography.

Data generated during step S5 may be used in step S6, which is an optional step. In step S6, the driving safety system may supply data used in performing one or more functions aimed at improving road user safety and/or comfort, such as automatic cruise control, lane trace assistance, lane change assistance, automatic high-beam, or combinations thereof.

In step S7, the driving safety system analyzes the result of the first collision risk assessment to determine whether the predicted paths of the first and second road users correspond to a high probability of collision between the two, or not (for example by comparing the result to a predetermined risk threshold). If a collision between the first and second road users appears unlikely, the driving safety system reverts back to step S1; otherwise, the driving safety system proceeds to step S8.

In step S8, the driving safety system issues a first warning to the beneficiary road user. The first warning may include a visual signal, for example.

In step S9, the driving safety system updates the current data. The current data may be updated using all available equipment.

In step S10, the driving safety system determines whether the equipment used to update the current data is functioning properly. If no malfunction is detected in step S10, the driving safety system proceeds to step S12; otherwise, the driving safety system proceeds to step S11 before proceeding to step S12.

In step S11, driving safety system isolates current data which were obtained from non-malfunctioning equipment from those which were obtained from malfunctioning equipment. The current data obtained from non-malfunctioning equipment is then used in step S12. If a given system is determined in step S2 to have been malfunctioning, but is determined in step S10 to not have be malfunctioning, the current data gathered by that system in step S10 may be preserved for use in step S12, even though the current data gathered by that system in step S2 was excluded from use in step S4.

In step S12, the current data (be they from all systems, or only from non-malfunctioning systems), are examined to determine whether another road user is detected (for example the target). If no target is detected, then the driving safety system reverts back to step S1; otherwise, the driving safety system proceeds to step S13.

In step S13, the driving safety system begins pre-crash safety measures, and/or adjustment and/or execution of an adaptive cruise control functionality, a pre-crash safety functionality, an automatic high-beam functionality, a lane-change assistance functionality, a lane-keeping assistance functionality, or combinations thereof. The pre-crash safety functionality may include, as a non-limiting example, initiating (or even performing) a change in steering, prefilling brakes, initial application of an automatic emergency brake, or combinations thereof.

In step S14, the driving safety system performs a second collision risk assessment, based on the updated current data (be they from all systems, or only from non-malfunctioning systems).

In step S15, the driving safety system analyzes the result of the second collision risk assessment to determine whether the predicted paths of the first and second road users correspond to a high probability of collision between the two, or not.

If a collision between the first and second road users appears likely in step S15, the driving safety system executes step S16 before returning to step S1; if the collision appears unlikely in step S15, the driving safety system executes step S17 before returning to step S1.

In step S16, the driving safety system issues a second warning to the beneficiary road user. The second warning may include an audio signal.

In step S17, the driving safety system cancels the various actions taken in response to the analyses of the results of the collision risk assessments. For example, the action(s) taken per step S13 and/or S6, and/or the warning(s) issued per step S16 (if issued during a previous iteration of the process) and/or S8 may be canceled.

It is contemplated that each iteration's current data (either as obtained/updated from all systems per S1/S9, or from only non-malfunctioning systems per S3/S11), be used to enrich the past data available for subsequent iterations. In Fig. 5, a non-limiting example is shown using dashed lines representing a flow of current data into the set of past data. For example, when none of the equipment used in step(s) S1 and/or S10 was malfunctioning, current data gathered using all sources may be used to enrich the past data. On the other hand, if some of the current data gathered during step(s) S1 and/or S10 came from malfunctioning equipment, those data may be excluded during step(s) S3 and/or S11, such that only the current data gathered using non-malfunctioning equipment are used to enrich the past data. The current behavior of the beneficiary, and/or one or more target road users is/are recorded as one or more new road user paths. For example, the beneficiary's path and/or the path(s) of the one or more targets may be recorded in the path history after the current period, in the same manner as the beneficiary's path. When/if the database reaches a maximum capacity, it is contemplated to record each subsequently-recorded path so as to replace the oldest path in the path history. As a non-limiting example, the past data may be enriched with the current data prior to returning to step S1.

In any of the foregoing examples, it is contemplated that the driving safety system associate a level of confidence with a given collision risk assessment, which reflects a quantity of past paths contained in the path history, or even a quantity of candidate paths or probable paths used in determining road users' predicted paths. It is also contemplated that the driving safety system decide whether or not to take action - for example issue/cancel a(n additional) warning, or perform a driving safety operation - in response to the collision risk assessment, based on this level of confidence.

It is also contemplated to provide a computer program including instructions which, when executed by a computer, cause the computer to perform a collision risk assessment as described herein. It is also contemplated to provide a computer-readable medium including such instructions.

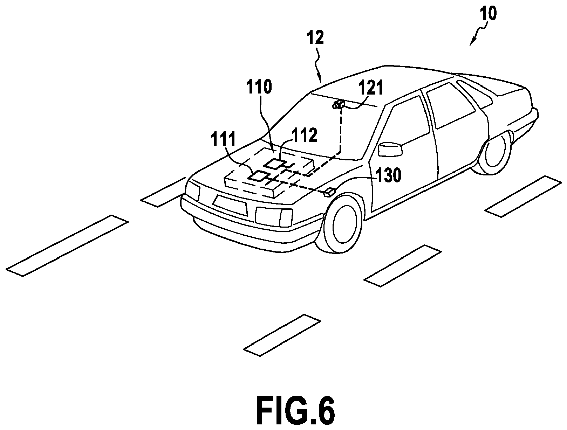

Fig. 6 shows the first road user 10 of Fig. 1. As a non-limiting example, any of the road users described with regard to Fig. 1 to Fig. 4 may have an architecture similar or even identical to this road user 10, as represented in Fig. 6 The road user's 10 includes a driving safety system 12, environmental sensors 121, a communications system 130, and a computer 110.

The functions (the functional units) of the driving safety system 12 are implemented on the computer 110. The computer 110 includes a computer-readable storage medium 111, and one or more processors 112. The one or more processors 112 are intended to be representative of the presence of any one or more processors or processing devices, of any of a variety of forms. The storage medium 111 stores instructions which when executed by the one or more processor(s) 112 cause the one or more processor(s) 112 to implement the different functional units or functions of the driving safety system 12.

A similar architecture may be used when the driving safety system is provided as part of roadway infrastructure equipment.

Part or substantially all the data used by the driving safety system 12, in particular the path history, may be stored in a backend, such as a cloud environment. Similarly, part or all the data processing carried out to assess the collision risk may be performed locally, such as by the road user or roadway infrastructure equipment, and/or on the backend. When the collision risk assessment is performed locally, the road user and/or roadway infrastructure equipment may access the path history preemptively or on-demand. When the collision risk assessment is performed on the backend, the roadway infrastructure equipment and/or road user may query the backend, supplying requisite information thereto as input for the collision risk assessment, and receive the collision risk assessment from the backend.

Although the described embodiments were provided as different exemplary embodiments, it is envisioned that these embodiments are combinable or, when not conflicting, the features recited in the described embodiments may be interchangeable. Moreover, the features recited in the described embodiments are not inextricably linked to one another, unless such a linkage is clearly indicated between two given features.

Throughout the description, including the claims, the term "comprising a" should be understood as being synonymous with "comprising at least one" unless otherwise stated. In addition, any range set forth herein, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A computer-implemented method of assessing a risk of a first road user (10) colliding, within an area (1), with a second road user (20), the method comprising:
- determining a predicted path (11) of the first road user (10), the predicted path (11) of the first road user (10) being a road user path along which the first road user (10) is predicted to travel,
- determining a predicted path (21) of the second road user (20), the predicted path (21) of the second road user (20) being a road user path along which the second road user (20) is predicted to travel, and
- calculating the collision risk assessment by determining a likelihood of collision, within the area (1), between the first road user (10) and the second road user (20) based on the predicted path (11) of the first road user (10), the predicted path (21) of the second road user (20), and a combination of current data and past data,
wherein:
- the current data correspond to a current period, during which the first road user (10) is present in the area (1), and include a current behavior (C1) of the first road user (10) and a current behavior (C2) of the second road user (20),
- the past data correspond to a past period, prior to the first period, and include a path history (2) of the area (1),
- the path history (2) of the area (1) includes a plurality of past paths (P1, P2, P3, P4), which are road user paths performed in the area (1) during the past period,
- determining the predicted path (11) of the first road user (10) includes comparing the current behavior (C1) of the first road user (10) to the path history (2) of the area (1), and matching at least one first past path (P1, P4) of the path history (2) of the area (1) to the current behavior (C1) of the first road user (10), and basing the predicted path (11) of the first road user (10) on said at least one first past path (P1, P4).

2. The method of claim 1, wherein determining the predicted path (21) of the second road user (20) includes comparing the current behavior (C2) of the second road user (20) to the path history (2) of the area (1), and matching at least one second past path (P2) of the path history (2) of the area (1) to the current behavior (C2) of the second road user (20), and basing the predicted path (21) of the second road user (20) on said at least one second past path (P2).

3. The method of claim 1 or 2, wherein determining the predicted path (11) of the first road user (10) includes matching a plurality of first past paths (P1, P4) of the path history (2) of the area (1) to the current behavior (C1) of the first road user (10), and basing the predicted path (11) of the first road user (10) on said plurality of first past paths (P1, P4), and/or wherein determining the predicted path (21) of the second road user (20) includes matching a plurality of second past paths of the path history (2) of the area (1) to the current behavior (C2) of the second road user (20), and basing the predicted path (21) of the second road user (20) on said plurality of second past paths.

4. The method of any of claims 1 to 3, wherein the current behavior (C1) of the first road user (10) includes data pertaining to the first road user's position, velocity, acceleration, steering, yaw angle, yaw rate, or combinations thereof, and/or the current behavior (C2) of the second road user (20) includes data pertaining to the second road user's position, velocity, acceleration, steering, yaw angle, yaw rate, or combinations thereof.

5. The method of any of claims 1 to 4, comprising recording one or more new road user paths based on the current behavior (C1) of the first road user (10) and/or the current behavior (C2) of the second road user (20), and, subsequent to the current period, enriching the past data by supplementing the path history (2) of the area (1) with said one or more new road user paths.

6. The method of any of claims 1 to 5, comprising combining the path history (2) of the area (1) with past data pertaining to a road user's past behavior in the area (1) during the past period.

7. A driving safety system (12, 32, 52) comprising at least one processor and memory storing instructions which, when executed by said at least one processor cause said at least one processor to perform the method of any of claims 1 to 6 in order to provide a first road user (10) with a collision risk assessment of an area (1, 4, 5) with respect to a second road user (20).

8. The driving safety system (12, 32, 52) of claim 7, wherein the driving safety system (12, 32, 52) is configured to:
- acquire data about at least one of the first road user (10) and the second road user (20) pertaining to the current behavior (C1, C2) of said at least one of the first road user (10) and the second road user (20), based on sensor(s) of the driving safety system;
- determine a level of confidence for the acquired data, based at least on said sensor(s), and optionally on a detection distance between one of the sensor(s) and said at least one of the first road user (10) and the second road user (20); and
- modulate the collision risk assessment based on the level of confidence.

9. The driving safety system (12, 32, 52) of claim 7 or 8, configured to:
- obtain a current behavior (C1) of a first road user (10),
- obtain a path history (2, 6) of an area (1, 4, 5) in a vicinity of the first road user (10),
- detect a second road user (20) in the vicinity of the first road user (10),
- obtain a current behavior (C2) of the second road user (20) in response to detection of the second road user (20),
- perform a first collision risk assessment in response to detection of the second road user (20), and
- issue a warning to the first road user (10) and/or the second road user (20) in response to the first collision risk assessment exceeding a predetermined risk threshold.

10. The driving safety system (12, 32, 52) of claim any of claims 7 to 9, wherein:
- the second road user (20) is detected in the vicinity of the first road user by means of a communications system,
- the second road user's current behavior (C2) is obtained by means of the communication system, in response to detection of the second road user (20) by means of the communications system, and
- the driving safety system is configured to perform the first collision risk assessment in response to detection of the second road user (20) in the vicinity of the first road user (20) by means of the communications system.

11. The driving safety system (12, 32, 52) of any of claims 7 to 10, wherein:
- the second road user (20) is detected by means of at least one environment sensor of the first road user (10),
- the second road user's current behavior (C2) is obtained by means of the environment sensor(s), in response to detection of the second road user (20) by means of the environment sensor(s), and
- the driving safety system is configured to perform a second collision risk assessment by means of the method of any of claims 1 to 6 in response to detection of the second road user (20) by means of the environment sensor(s).

12. The driving safety system (12, 32, 52) of claim 10 or 11, configured to perform a driving safety operation based at least on the first road user's current behavior (C1), the path history (2, 6), and optionally the second road user's current behavior (C2), in response to at least one of the first collision risk assessment and the second collision risk assessment.

13. The driving safety system (12, 32, 52) of claim 12, wherein the driving safety system (12, 32, 52) is configured to assign a level of confidence to the past data, and to perform the driving safety operation if the level of confidence exceeds a predetermined confidence threshold, and the level of confidence corresponds to a quantity of past data available for use in performing said at least one of the first collision risk assessment and the second collision risk assessment.

14. The driving safety system (12, 32, 52) of any of claims 12 to 13, wherein the driving safety system (12, 32, 52) is configured to determine whether the second road user's current behavior (C2), as obtained by means of one of the communications system and the environment sensor(s), is associated with a malfunction state of said one of the communications system and the environment sensor(s), and to perform the second collision risk assessment based on the first road user's current behavior (C1), the path history (2, 6), and the second road user's current behavior (C2), as obtained by means of the other of the communications system and the environment sensor(s), in response to determining that the second road user's current behavior (C2), as obtained by means of said one of the communications system and the environment sensor(s), is associated with a malfunction state of said one of the communications system and the environment sensor(s).

15. The driving safety system (12, 32, 52) of any of claims 12 to 14, wherein the driving safety system (12, 32, 52) is configured to perform the second collision risk assessment based on the first road user's current behavior (C1), the path history (2, 6), the second road user's current behavior (C2), as obtained by the communications system, and the second road user's current behavior (C2), as obtained by the environment sensor(s), in response to determining that neither the second road user's current behavior (C2), as obtained by means of the communications system, nor the second road user's current behavior (C2), as obtained by means of the environment sensor(s), is associated with malfunction states of the communications system and environment sensor(s).
